# EUROPEAN PATENT APPLICATION

(11) **EP 1 837 232 A2**
(43) Date of publication of application: **26.09.2007**
(21) Application number: 07104066.1
(22) Date of filing: 13.03.2007
(51) Int. Cl.: B60P 1/02, B62D 61/12

(54) **Trailers**

(30) Priority: 24.03.2006 GB 0605879
(71) Applicant: BRADLEY DOUBLELOCK LIMITED, West Yorkshire. BD16 2NH (GB)
(72) Inventor: Bull, Michael Sean, Bringley West Yorkshire, BD16 2NH (GB)
(74) Representative: Sherrard-Smith, Hugh

(57) **Abstract**

The trailer (10) will, in use, have an accommodation or other structure (not shown) mounted on a fixed frame (12). A tow bar (14) is connected to the tow ball (not shown) of a vehicle and the trailer is towed to the desired location. Whilst being towed, wheels (16) support the trailer.

Once at the desired location a jockey wheel (18) is lowered in a conventional way to support the front of the trailer. The vehicle is then detached from the trailer. Next an axle (20) that supports the wheels (16) is pivoted upwardly to carry the wheels up into the frame. During that movement the rear of the frame comes to rest on the ground. With the wheels retracted the jockey wheel (18) and the rear of the trailer provide the ground support.

The jockey wheel is then moved to a retracted position until the frame alone supports the trailer on the ground.

## Description

The present invention relates to a trailer and a method of operating a trailer and is particularly, although not exclusively relevant to accommodation trailers.

GB 2 194 925 discloses a trailer with wheels connected thereto by leaf springs. The trailer can be jacked up and an end of the leaf springs can be freed from a holding member to allow the wheels to pivot about the other end of the leaf springs to an inoperative position. GB 2 240 308 and GB 2 204 537 show similar arrangements for transportable accommodation. After one end of the springs has been freed, rams allow the accommodation to be lowered onto the ground.

In each of the prior art arrangements the wheels have to be first raised and then partially disconnected from the trailer. This is time consuming. Furthermore, in each of the prior art arrangements the transition between the structures being supported by the wheels and resting on the ground involves the structure being tilted. This is undesirable, especially for transportable accommodation that may have, for example, items on shelves or various forms of loose stowage.

It is an object of the present invention to attempt to overcome at least one of the above or other disadvantages.

The present invention is defined in the claims appended hereto.

The actuating means may be arranged to move the trailer from each position to the other position.

The actuation means, when moving from the operative to the inoperative position, may be arranged to cause lowering of the trailer during at least part of that movement. The lowering of the wheel by the actuation means may be arranged to lower at least part of the trailer onto the ground.

Movement of the wheel from the inoperative position to the operative position by the actuation means may be arranged to lift at least part of the trailer. That lifting may be arranged to lift at least part of the trailer off the ground.

The first pivot of the member may be axially adjacent to the link.

At least two wheels each being movable as described may be included and those two wheels may be connected by a common axle.

The trailer may comprise an accommodation trailer.

The movable support may include at least one wheel. The movable support may be mounted forward of the wheel mounting arrangement. The movable support may be mounted rearward of the wheel mounting arrangement.

The movable support may include an actuating means arranged to move the support between the retracted position and extended position.

The trailer may include at least two axles each movable between an operative and an inoperative position.

The method may comprise powering the wheel from at least one position to the other and may comprise powering the wheel between both positions. When powering the wheel to the inoperative position at least part of the trailer may be lowered onto the ground. When powering the wheel to the operative position, at least part of the trailer may be raised off the ground.

The method may comprise guiding the wheel when moving between the positions with a first link that is connected to the wheel assembly and that pivots relative to a frame of the vehicle and a second link that pivots relative to the wheel assembly and relative the frame and which also moves its pivot relative to the frame along a guide afforded by the frame.

According to a further aspect of the present invention, a trailer includes a tow bar which, when the trailer is towed, extends forwardly from the trailer, characterised in that the tow bar is connected to the trailer whereby it can be moved from an operative, towing position and a retracted position with the tow bar being connected to the trailer in both positions.

In the operative position, the tow bar may be elongate and part of the tow bar may be within the region bounded by the trailer and, in the operative position, the tow bar may be supported at two spaced locations and may be supported at a forward region by at least one forwardly facing projection of the tow bar extending into a recess fixed on the trailer. The tow bar may be supported at a rear region by the bar extending at least partially into a housing of the trailer.

The tow bar may be movable in a rearwards direction when moving from the operative to the retracted position and that movement may be linear movement.

The tow bar may be held in at least one of the positions by a releasable lock. The tow bar may be held in both positions by a releasable lock and the releasable lock may be the same lock for both positions. The releasable lock may be arranged to act on the tow bar at spaced locations on the tow bar when retaining the tow bar in the operative or retracted position. The releasable lock may be biased into a locking position.

In the retracted position, the tow bar may be retracted such that it does not project beyond a frame of the trailer.

The trailer may be movable from a towing configuration in which wheels of the trailer support the trailer and a non-towing configuration in which the trailer has moved downwardly towards the ground in which, in the non-towing configuration, the tow bar is in the contracted position.

A handbrake may be detachably mounted on the tow bar, the handbrake being arranged to be detached from the tow bar when the tow bar is moved to the inoperative position.

According to a further aspect of the present invention a method of operating a trailer comprises moving a tow bar from an operative position to a retracted position with the tow bar being connected to the trailer in both positions.

The tow bar may be connected to the trailer as it moves between the positions.

The present invention can be carried into practice in various ways but one example will now be described by way of example and with referenced to the accompanying drawings, in which:-
Figure 1 is a detailed underneath perspective view of the raising and lowering assembly for one wheel on an axle;
Figure 2 is a detailed top perspective view of the towing end of the trailer, and
Figure 3 is a perspective view from underneath the trailer.

The trailer 10 will, in use, have an accommodation or other structure (not shown) mounted on a fixed frame 12. A tow bar 14 is connected to the tow ball (not shown) of a vehicle and the trailer is towed to the desired location. Whilst being towed, wheels 16 support the trailer.

Once at the desired location a jockey wheel 18 is lowered in a conventional way to support the front of the trailer. The vehicle is then detached from the trailer. The trailer may now be lowered until the frame alone supports the trailer on the ground. In the lowered position the wheels are in an inoperative position such that the trailer is substantially not free to move.

During lowering of the trailer an axle 20 that supports the wheels 16 is pivoted upwardly to carry the wheels up into the frame. The jockey wheel is also moved to a retracted position. The wheels may be hidden by side walls of the trailer when the wheels are in the retracted position.

Preferably the movement of the wheels and jockey wheel are controlled together such that the trailer is lowered with the frame in a mainly level plane. Alternatively the wheels and jockey wheel may be operated independently, for example the wheels may first be pivoted upwardly such that the rear of the frame comes to rest on the ground. When the wheels are retracted the jockey wheel 18 and the rear of the trailer provide the ground support. The jockey wheel is then moved to a retracted position until the frame alone supports the trailer on the ground.

Either before or after the trailer has been lowered, the tow bar 14 is moved rearwardly into the frame such that it does not form an obstruction.

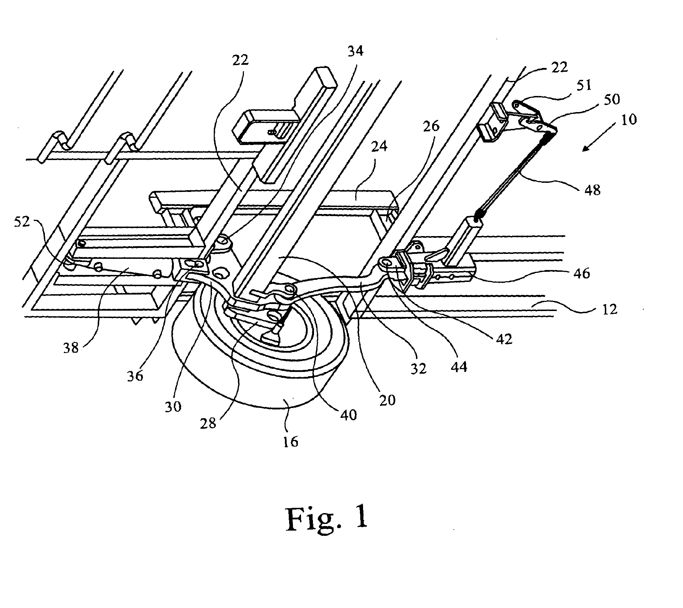

As shown in Figure 1, the frame 12 affords an upwardly extending recess into which the wheels 16 and the axle 20 can move. That recess is formed by parallel, spaced cross members 22. The cross members 22 are connected at each side by a pair of adjacent longitudinally extending bars 24 secured to vertical struts 26 extending upwardly from the cross-members 22.

Each wheel is connected to the axle via a drop arm 28 in a conventional manner. Alternatively, each wheel may be connected to the axle via a rigid axle or any other well known axle arrangement.

The axle is, in a towing mode, supported at each end by a plate 30 extending forwardly and a link 32 extending rearwardly.

The plate 30 is rigidly connected to the axle 20 and is connected to the frame via a pivot 34 at one location and via a pivot 36 and an hydraulic ram 38 at a spaced location. The link 32 is connected to the axle 20 axially adjacent to where the plate 30 is connected by a pivot 40. The trailing part of the link 32 is connected to slider 42 by a pivot 44. The slider 42 is retained in a housing 46.

In the towing mode, a pin or latch (not shown) extends through an opening (not shown) in the slider housing and an opening (not shown) in the slider 42 to prevent any significant linear movement of the slider 42 in the housing 46. A very limited amount of movement is permitted as there is a series of disc springs in the housing 46 between its retained opening and the pivot 32. This assists in the suspension response of the trailer on the wheels. With the latch holding the slider the axle and wheel are held in the position shown.

In order to retract the axle and wheels the latch is retracted from the opening by pulling on a bar 48 with a convention manual system as is apparent in the drawing and as is well known in the art. The bar 48 is connected to a pivotal bracket 50 which, when pivoting to pull the latch via bar 48 will also pull another bar (not shown) connected to the bracket 50 such that the slider at the opposite side is simultaneously released for sliding movement. Rotation of the bracket 50 is effected by any convenient means such as the pulling of a cable attached to the bracket 50 at a lug 51. The movement of the bracket and the simultaneous release of the latches is well known in the art and can be effected by any convenient means.

The axle may still be held rigidly even with the latches withdrawn as the pivots 34 and 36 of the plate 30 fix the axle in position. Consequently the latch in the housing 46 can easily be withdrawn without undue force as there need not necessarily be any axial force attempting to move the slider 42 through the housing. Alternatively there may be a slight or moderate sliding force when the latch is withdrawn or the hydraulic piston may be extended or retracted slightly to alleviate any sliding force.

That pulling of the latch may be effected mechanically, hydraulically or electrically.

With the slider now free to move, the piston in ram 38 can be extended to move the pivot 36 about a radius defined by the pivot 34 to move the axle and the wheels rearwardly and upwardly about the pivot 34 until complete retraction of the axle and wheels has occurred.

At the same time as this retracting movement occurs the ram 38, which is connected to the frame 12 by a pivot 52, moves about that pivot to swing the rearwardly extending part of the ram up into the frame. Furthermore, the slider 42 is pushed via the link 32 backwards, further into the housing 46 in a linear direction.

The trailer can be moved from a position in which the frame rests on the ground to a towing configuration largely in a reversal of the above described sequence of lowering operations. For instance, preferably, the movement of the jockey wheel and the wheels is simultaneous and controlled such that the frame remains substantially level during the transition between the trailer being supported on the ground by only the frame and the trailer being supported on the frame by the wheels and jockey wheel. Alternatively the jockey wheel may be lowered to move the front of the trailer up before the piston is retracted to lower the axle and wheels. Such movement of the piston may also lift the rear of the trailer up either after the movement has commenced or as soon as movement of the piston commences. Alternatively the piston can be retracted to raise the trailer prior to commencement of lowering of the jockey wheel and that movement of the piston may continue to the ultimate position of the piston prior to any lowering of the jockey wheel.

When the piston is retracted a spring (not shown) may assist in the latches at each side returning to the opening in the sliders to again prevent any significant movement of the slider and thereby hold the axle in place. It may be that the latch will snap forward into the slider before the piston is fully retracted to ensure that the latch will always engage with the slider. Limit switches may be used to ensure that the latch has engaged the opening in the slider and further controls may be used to ensure safe lowering or raising of the trailer.

Within the hydraulics the failure of the system is failsafe. If upstream pressure was suddenly lost fluid would be trapped in the cylinders that at worst would cause the controlled lowering of the unit due to its weight. This condition is acute when in the midst of the lift or lowering activity given that once it is in the operational mode then it is mechanically locked and when it is in the inoperative position then danger due to mass is not relevant. Furthermore the hydraulic system has an integral powered hydraulic pump. This may include a manual tap in feature that in the event of a flat battery or failure of the hydraulic pump the system can be operated using a manual pump.

It will be appreciated that a single operative can tow, detach or attach and move the trailer between the operative and inoperative positions.

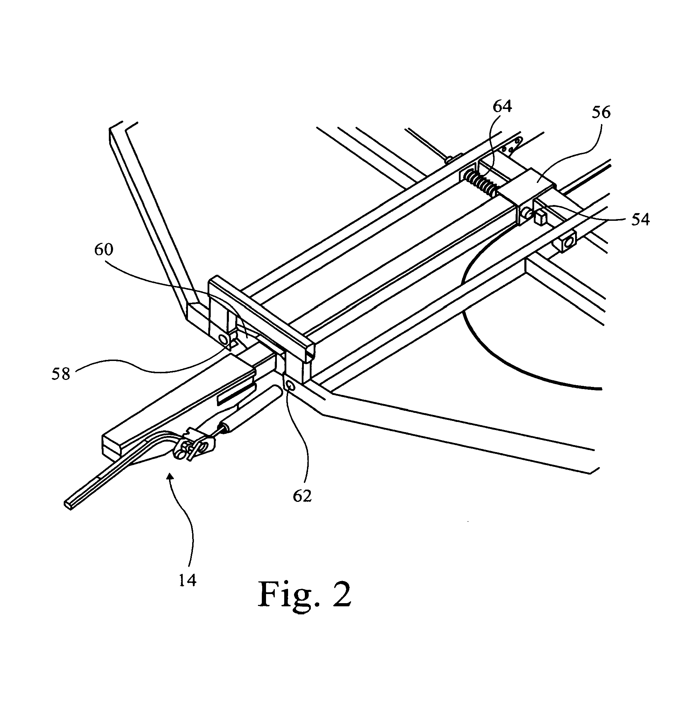

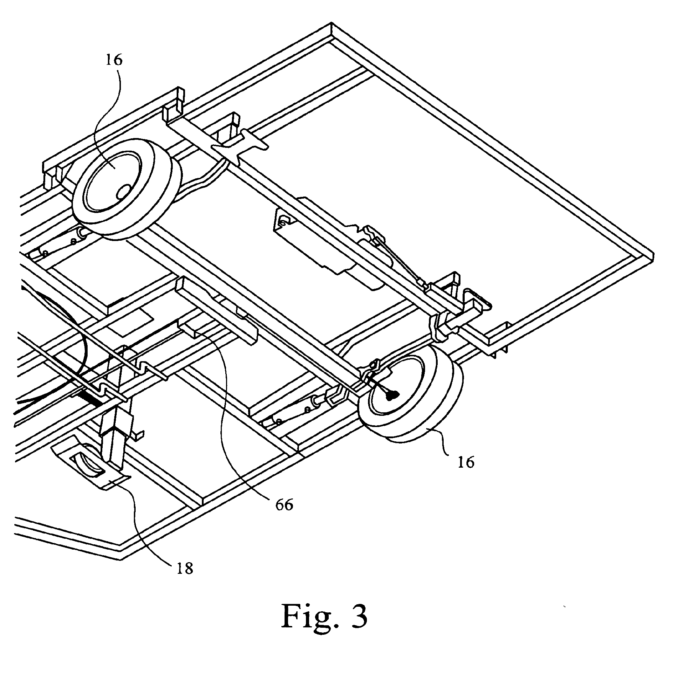

The mounting of the tow bar 14 on the frame can be seen in Figures 2 and 3.

In the operative position shown the bar 14 is held by a retractable pin 54 extending through a fixed bracket 56 and an opening in the bar. The front of the draw bar is held in position by two forwardly extending projections 58 on a bracket 60 extending from the sides of the bar being located in corresponding openings 62 in the frame.

To retract the bar, the pin 54 is retracted in any convenient manner against the force of a spring 64. The bar is then slid rearwardly through the bracket 56 until the spring is again biased back through another opening (not shown) in the bar to retain the bar in a retracted position. In this position the rear of the bar may rest on top of a bracket 66 shown in Figure 3. In order to retract the bar the handbrake is first detached. This is effected by a spring loaded plunger which normally holds the handbrake on the drawbar but which plunger can be retracted to release the handbrake and allow its removal.

Any of the operations referred to may be carried out by automatic means or power means or both.

The pin 54 is coupled to a warning device to ensure the safe engagement and function.

Whilst a single axle trailer has been described the trailer may be provided with two or more axles, each of which may be retractable as described herein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A trailer including at least one wheel mounting arrangement, the wheel mounting arrangement including at least one wheel and an axle rotatably supporting that wheel, the wheel being movable from an operative position, in which the wheel supports the trailer for towing and an inoperative position, **characterised in that** the trailer includes at least one actuation means arranged to move the wheel from at least one position to the other position.

2. A trailer as claimed in claim 1 in which the mounting arrangement includes a link connected to the arrangement and connected to a frame of the vehicle by a pivot about which pivot the wheel moves when moving between the operative and the inoperative position.

3. A trailer as claimed in Claim 2 in which the link is connected to the actuation means at a location spaced from the pivot.

4. A trailer as claimed in Claim 3 in which the actuation means is pivotally connected to the link by a first pivot and to the frame by a second pivot and the actuation means is arranged to move about the first and second pivots when moving between the operative and the inoperative positions.

5. A trailer as claimed in Claim 4 in which the actuation means comprises an extendable and retractable member.

6. A trailer as claimed in Claim 4 or 5 in which at least part of the actuation means moves upwardly towards the trailer relative to the trailer during at least part of the movement of the wheel from the operative to the inoperative position.

7. A trailer as claimed in Claim 6 in which that movement of the actuation means takes the actuation means from a position in which at least part of the actuation means extends below a frame of the trailer to a position in which none of the actuation means extends below the frame.

8. A trailer as claimed in any preceding claim in which the wheel is moved into the frame when the wheel is moved to the inoperative position.

9. A trailer as claimed in any preceding claim in which the wheel is obscured from view when in the retracted position.

10. A trailer as claimed in any of Claims 2 to 9 in which the link is fast with the axle.

11. A trailer as claimed in any preceding claim including a member connected to the wheel mounting arrangement by a first pivot and connected to a frame of the trailer by a second pivot, the second pivot being arranged to be guided during movement of the wheel from the operative to the inoperative position whereby the axis of the second pivot moves relative to the frame.

12. A trailer as claimed in Claim 11 in which the second pivot is arranged to be guided in a linear direction.

13. A trailer as claimed in Claim 11 or 12 including a releasable lock arranged, in the operative position, to prevent unwanted movement of the second pivot.

14. A trailer as claimed in Claim 13 including resilient means located between the releasable lock and the second pivot.

15. A trailer as claimed in any preceding claim in which, in the inoperative position, the trailer is supported solely by a frame of the trailer.

16. A trailer as claimed in any preceding claim in which the trailer includes at least one movable support, the moveable support being separate to the wheel mounting arrangement and mounted on the trailer spaced from the wheel mounting arrangement, wherein the movable support is movable between a retracted position and an extended position and the support is movable between each position by said movement of the wheel and support **characterised in that** the wheel and support are moved simultaneously such that the trailer remains substantially level.

17. A method of operating a trailer including at least one wheel mounting arrangement, the wheel mounting arrangement including at least one wheel and an axle rotatably supporting that wheel, and in which the wheel is movable from an operative position in which the wheel supports the trailer for towing and an inoperative position, **characterised in that** the trailer includes actuation means which, when actuated, move the wheel from at least one position to the other.
